# EUROPEAN PATENT SPECIFICATION

(11) **EP 1 526 982 B1**
(45) Date of publication and mention of the grant of the patent: **01.03.2006**
(21) Application number: 02772804.7
(22) Date of filing: 08.08.2002
(51) Int. Cl.: B60N 2/427

(54) **ACTIVE HEADREST FOR A VEHICLE SEAT**
AKTIVE KOPFSTÜTZE FÜR EINEN FAHRZEUGSITZ
REPOSE-TETE ACTIF POUR UN SIEGE DE VEHICULE

(43) Date of publication of application: 04.05.2005
(73) Proprietor: COMPAS S.R.L., 10024 Moncalieri TO (IT)
(72) Inventor: LIBANORE, Dante, I-10025 Pino Torinese (Torino) (IT)
(74) Representative: Rondano, Davide
(86) International application number: PCT/IT2002/000531
(87) International publication number: WO 2004/014688

(56) References cited:
- EP-A- 1 193 114
- DE-A- 3 900 495
- DE-C- 19 961 019
- US-A- 5 927 804

## Description

The present invention relates to an active headrest for a seat of a vehicle, such as, for example, a motor vehicle, of the type described in the preamble of Claim 1.

In order to limit, in the event of vehicle collisions, in particular in the event of rear-end collisions (telescoping), injuries to the cervical region of the vertebral column of the occupants produced by the so-called whiplash effect, that is to say, the effect of the abrupt backward movement of the head relative to the trunk owing to the inertial effects, it is known to use active headrests which can move forwards and/or upwards relative to the backrest of the seat in order to occupy the gap normally present between the head of the occupant and the front surface of the headrest, so as to oppose the backward movement of the head.

A known example of an active headrest for a motorcar seat is provided, for example, in United States patent US 5,927,804 which describes a safety system associated with a seat for moving the headrest of the seat, in the event of a collision of the vehicle, from a rest position corresponding to normal use of the headrest to an active position advanced towards the head of the occupant. This system comprises a lever-type operation mechanism housed inside the backrest of the seat, which mechanism is operated by a linear pyrotechnic actuator, in the event of a rear-end collision of the vehicle, in order to bring about a forward tilting movement of the headrest towards the head of the occupant. The linear actuator is controlled by an electronic control unit which receives and processes the information supplied by a collision sensor.

The selection of operation by pyrotechnic charge is evidently suggested by the need to minimize the response times of the operation mechanism, if possible to less than 20 ms from the initial moment of the collision, which is the time threshold after which the inertial effects on the occupant appear.

However, this known example of a headrest has the disadvantage of having an operation mechanism which is rather complex and, above all, needs to be housed in the backrest of the seat. As a result, a headrest of this type can be manufactured only in combination with the seat, it being almost impossible for it to be fitted afterwards on a conventional seat which is not suitably arranged.

The object of the present invention is to overcome the problems of the above-discussed prior art by providing an improved active headrest which ensures timely and effective operation, which has a simple structure and which can be manufactured separately from the seat in order to be installed thereon at any subsequent time.

An active headrest for a vehicle seat according to the preamble of Claim 1 is known from DE 10033913, DE 3900495 and BP 1193114.

DE 10033913 discloses an active headrest for a vehicle seat with a headrest body having a front soft padding and a rear rigid padding. A first support plate is fixedly arranged inside the headrest body and is connected by springs to a second plate which is movable in the longitudinal direction of the vehicle. A lock unit fixes the movable plate in position. During a rear collision, an impulse from a control unit releases the movable plate allowing it to move towards the occupant's head.

DE 3900495 discloses a head restraint for a motor-vehicle seat having a padded element which can be automatically shifted relative to the remaining part of the head restraint by an adjusting device into an active position in which it approaches the head of the seat's occupant from the rear. The movement of the padded element from the rest position to the active position is either a combined rotational movement about a fixed axis and a movable axis or a translational movement in the longitudinal direction.

EP 1193114 discloses a headrest for a car seat comprising a fixed rear housing and a movable front cover connected by upper and lower levers forming a quadrilateral linkage which allows the cover to move from a normal position to a protecting position advanced and raised with respect to the normal position. The cover is biased by a spring, one end of which is attached to the rear housing while the other is directly or indirectly connected to the levers.

This object is completely achieved according to the invention by means of an active headrest for a motor vehicle seat having the characteristics defined in the characterizing portion of Claim 1.

Further advantageous characteristics are defined in the dependent claims.

The characteristics and advantages of the invention will appear from the detailed description which follows, given purely by way of non-limiting example with reference to the appended drawings, in which:
- Figures 1 and 2 are perspective views showing schematically a first preferred embodiment of an active headrest according to the present invention, in a rest position and an active position, respectively,
- Figures 3 and 4 are longitudinal sectional schematic views which correspond to Figures 1 and 2, respectively,
- Figures 5 and 6 are perspective views showing schematically a second embodiment of an active headrest according to the present invention, in a rest position and an active position, respectively,
- Figures 7 and 8 are longitudinal sectional schematic views which correspond to Figures 5 and 6, respectively,
- Figures 9 and 10 are perspective views showing schematically a third embodiment of an active headrest according to the present invention, in a rest position and an active position, respectively, and
- Figures 11 and 12 are longitudinal sectional schematic views which correspond to Figures 9 and 10, respectively.

In the description and claims which follow, terms such as "longitudinal" and "transverse", "front" and "rear", "lower" and "upper" are to be understood as referred to the mounted state on the vehicle.

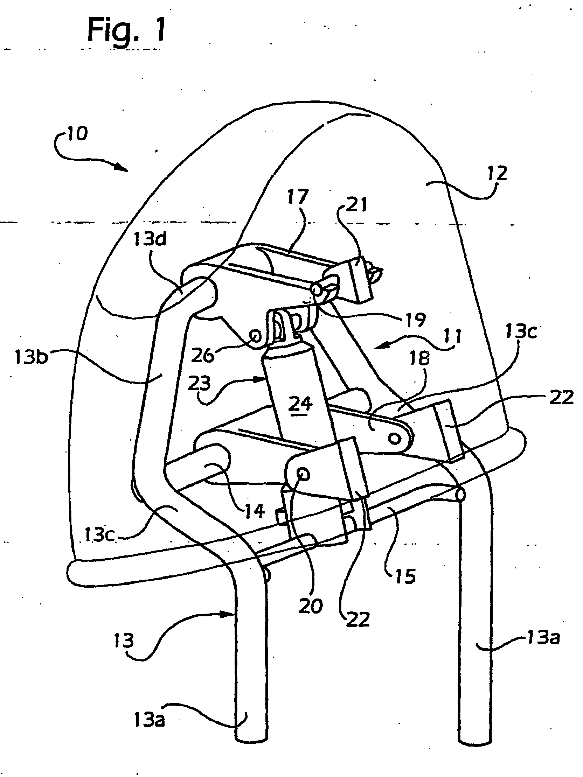

Firstly, with reference to Figures 1 to 4 relating to a first preferred embodiment of the present invention, an active headrest generally designated 10 comprises a frame 11 having a tubular structure which can be mounted on the upper portion of the backrest of a motor vehicle seat (of per-se-known type and not illustrated) and a body 12 which acts as a support element for the head of the occupant of the seat, and is covered at least in its front region with soft material.

The frame 11 comprises basically a metal tubular structure 13 which is bent suitably to form:
- a first pair of essentially rectilinear and vertical segments 13a (or, more accurately, slightly inclined in accordance with the inclination of the backrest of the seat), with their axes substantially parallel, which segments can be inserted into corresponding receiving locations provided in the upper portion of the backrest to enable the installation of the headrest on the seat,
- a second pair of essentially rectilinear and vertical segments 13b which are arranged in front of and above the segments 13a,
- a third pair of essentially rectilinear segments 13c the axes of which run obliquely in respective longitudinal vertical planes, each of the segments connecting the respective vertical segments 13a and 13b, and
- an essentially rectilinear segment 13d which is arranged transversely to interconnect the upper ends of the front vertical segments 13b.

The frame 11 further comprises an essentially rectilinear metal tubular element 14 with a transverse axis, which is connected (for example, by welding) at its ends to the respective connection zones between the segments 13b and 13c of the tubular structure 13. An essentially rectilinear and transverse metal bar, indicated 15 and having a diameter advantageously less than that of the remaining tubular elements which constitute the frame 11, is connected (for example, by welding) to the zones of connection between the segments 13a and 13c of the tubular structure 13.

As will be explained in detail in the rest of the description, the tubular segment 13d, the tubular element 14 and the bar 15, which are arranged in sequence from top to bottom, serve as supports for pivoting of respective pivoting members which constitute the movement mechanism for moving the headrest, in the event of a collision of the vehicle, between a rest position for normal use and an active position which is advanced and raised relative to the rest position.

The body 12 of the headrest is an internally hollow member having a generally bell-like shape. The body 12 comprises basically an internal shell which is covered with padding of a soft material and comprises a convex front wall 12a, which is intended to provide a surface for supporting the head of the occupant, an essentially flat rear wall 12b and a curvilinear upper portion 12c which connects the two front and rear walls, closing the shell of the body 12 from above. The vertical lower segments 13a of the tubular structure 13 of the frame 11 for mounting on the backrest of the seat extend through a lower opening 16 of the body 12.

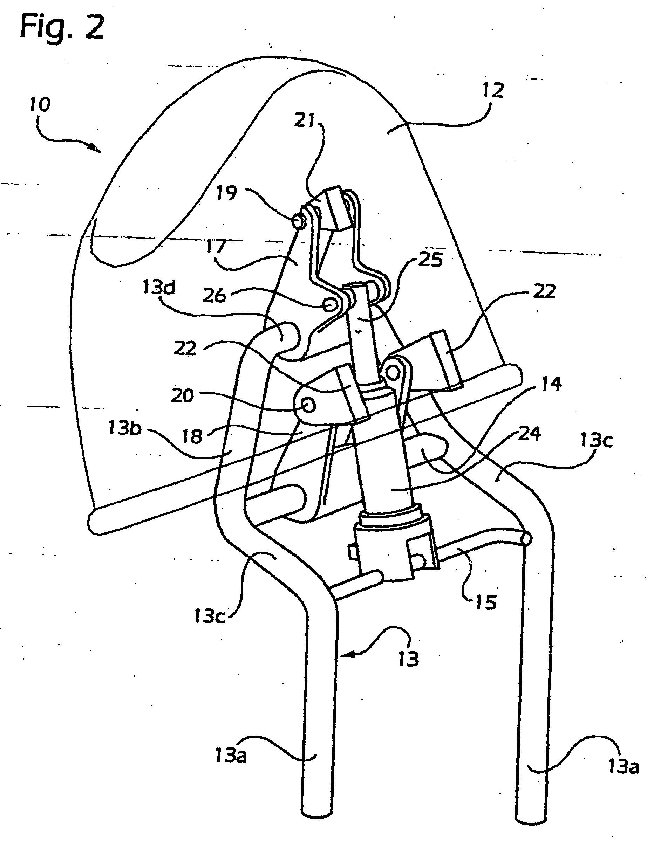

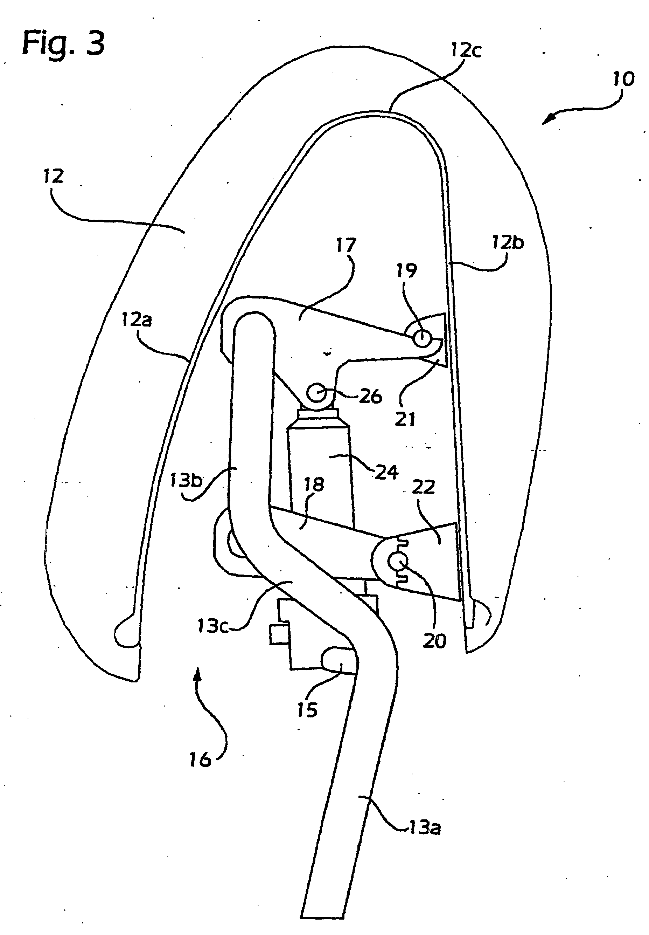

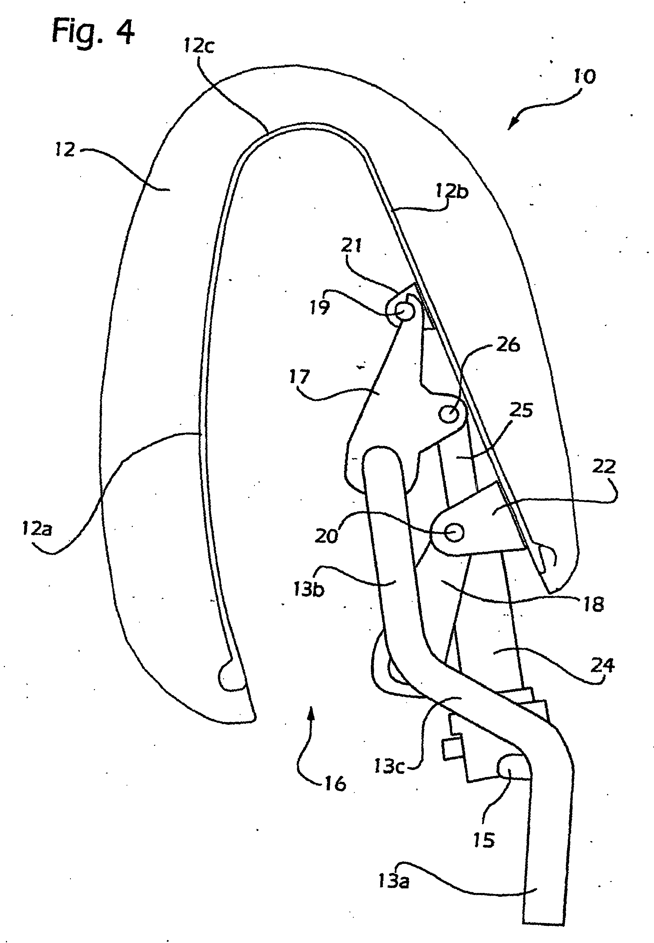

According to this first embodiment of the invention, the mechanism for moving the headrest comprises an articulated quadrilateral linkage which can move the body 12 forwards and upwards from a rest position (Figures 1 and 3), that is to say, a position for normal use of the headrest as a support for the head, to an active position (Figures 2 and 4) as close as possible to the head of the occupant, in order to prevent rebounding movement of the head backwards (so-called whiplash) and thereby to minimize the risk of injuries to the cervical region.

The quadrilateral linkage comprises basically a pair of pivoting levers 17 and 18, that is an upper lever and a lower lever, respectively, which are supported for pivoting at their front ends by the tubular segment 13d and the tubular element 14 of the frame 11, respectively. The levers 17 and 18 are articulated at their rear ends through pins 19 and 20, respectively, to support members 21 and 22, respectively, which are fixed to the internal face of the rear wall 12b of the body 12.

A linear pyrotechnic actuator 23 (of per-se-known type) is provided for the operation of the movement mechanism and comprises a cylinder 24 which is supported for pivoting by the bar 15 of the frame 11, and a rod 25 which is articulated at the upper portion, through a pin 26 to the upper pivoting lever 17.

As can be clearly seen in Figures 1 to 4, the extension of the actuator 23 brings about a counter-clockwise rotation of the pivoting levers 17 and 18, thereby moving the body 12 of the headrest forwards and upwards from the above-identified rest position to the above-identified active position.

The operation of the actuator is advantageously controlled by an electronic control unit (per-se-known and not illustrated) which receives and processes the information supplied by at least one collision sensor (also not illustrated), such as, for example, a longitudinal accelerometer, in order to evaluate the type and intensity of the collision and consequently to establish whether the conditions for activating the headrest exist.

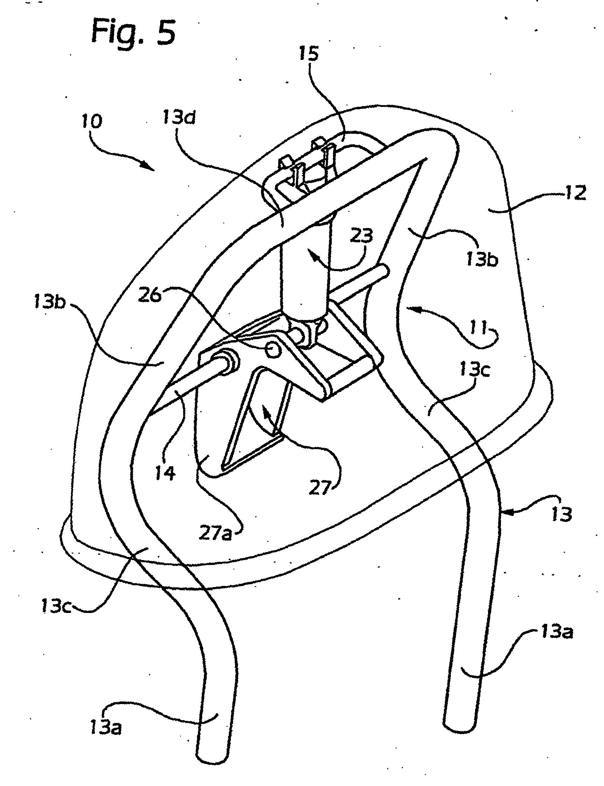

A second embodiment of an active headrest according to the present invention is illustrated in Figures 5 to 8, in which the same reference numerals have been given to parts and elements identical or similar to those in the preceding Figures.

This variant of construction differs from the first embodiment substantially in that the body of the headrest is mounted pivotably on its own support frame, in particular about a transverse horizontal axis arranged in the vicinity of the upper portion of the headrest, so that the movement of the body from the rest position to the active position consists simply in a forward pivoting (tilting) about that axis.

With reference to Figures 5 to 8, the frame 11 of the headrest comprises substantially a metal tubular structure 13 which is bent suitably to form:
- a first pair of essentially rectilinear and vertical segments 13a (or more accurately, slightly inclined in accordance with the inclination of the backrest of the seat), with their axes substantially parallel, which segments can be inserted into corresponding receiving locations provided in the upper portion of the backrest to enable the installation of the headrest on the seat,
- a second pair of segments 13b which are essentially rectilinear and inclined backwards relative to the vertical and which are arranged in front of and above the segments 13a,
- a third pair of curvilinear segments 13c, each of which connects the respective vertical segments 13a and 13b, and
- a substantially rectilinear segment 13d which is arranged transversely to interconnect the upper ends of the segments 13b.

The frame 11 further comprises an essentially rectilinear metal tubular element 14 with transverse axis, which is connected (for example, by welding) at their ends to the base of the upper segments 13b of the tubular structure 13, and a substantially C-shaped metal bar 15 which is fixed at its ends (for example, by welding) to the front face of the segments 13d of the tubular structure 13.

The body 12 of the headrest is substantially identical to that described above with regard to the first embodiment, from which it differs only by the addition of at least one appendage 12d which projects downwards from the upper curvilinear portion 12c and which can engage the upper segment 13d of the tubular structure 13 in order to enable the pivoting of the body 12 about an upper transverse axis.

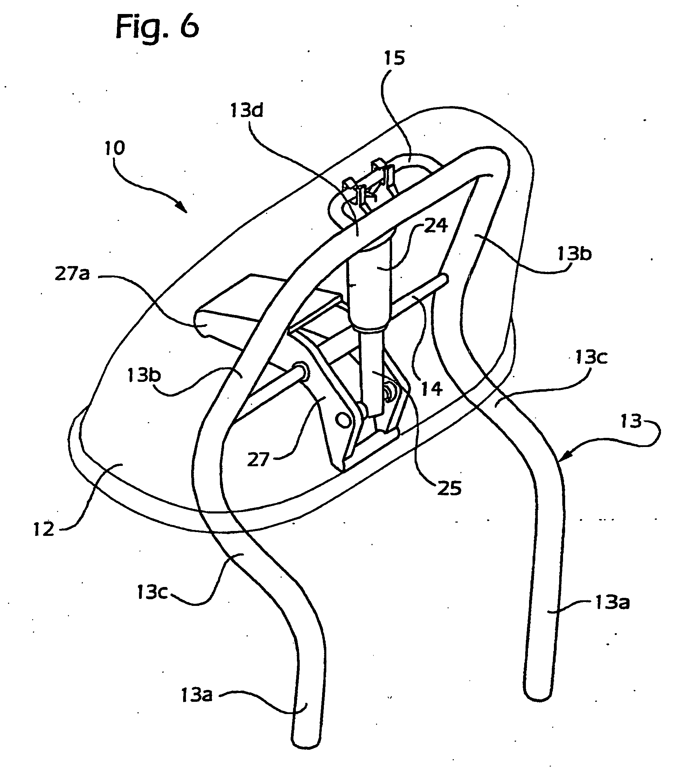

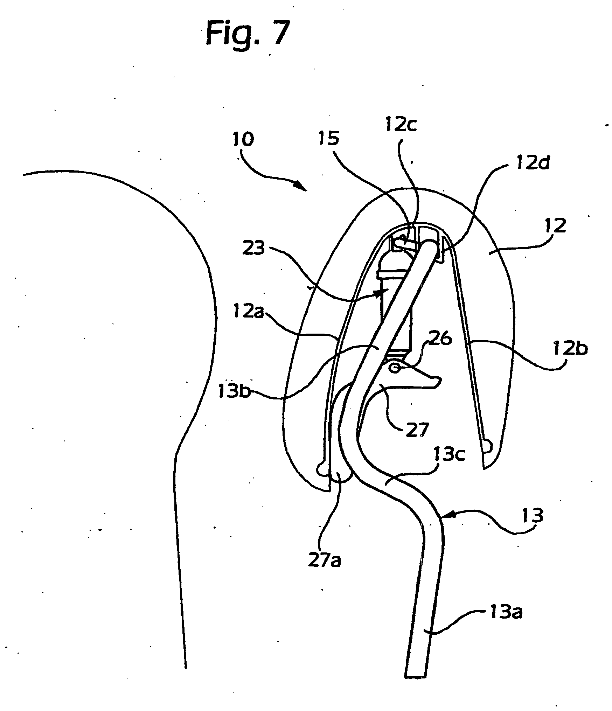

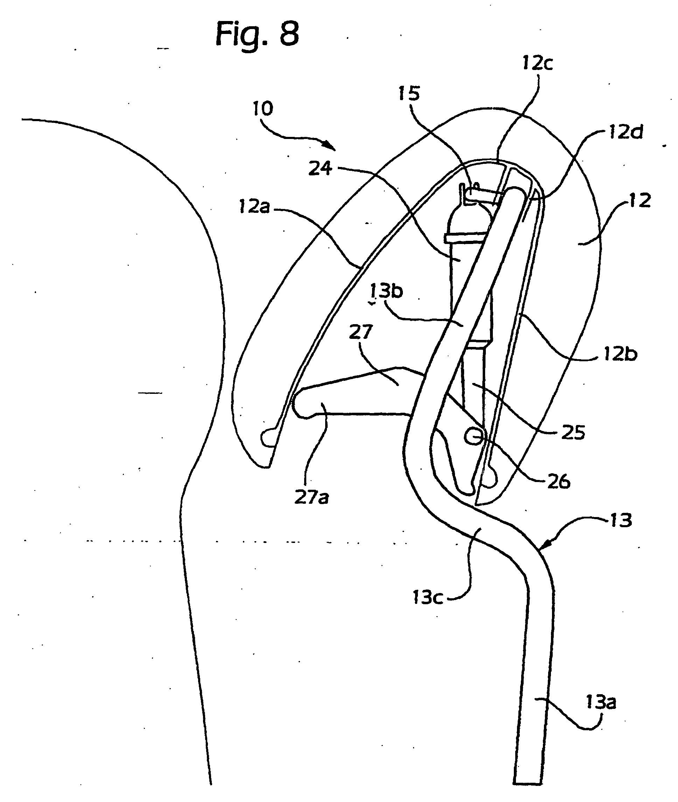

According to this second embodiment of the invention, the movement mechanism of the headrest comprises a rocker arm-type lever 27 mounted for pivoting at an intermediate point thereof about the tubular element 14 of the frame 11. The lever 27 is further articulated at its rear end, through a pin 26, to the end of the rod 25 of a linear pyrotechnic actuator 23, of the type described above, the cylinder 24 of which is articulated at the upper portion to the bar 15 of the frame 11. The lever 27 forms, in front of its own pivot axis, a cam portion 27a which can press against the internal face of the front wall 12a of the shell of the body 12 in order to move the latter from the rest position (Figures 5 and 7) to the active position (Figures 6 and 8).

In the event of a collision, therefore, the lever 27 pivots clockwise about the bar 15, owing to the extension of the actuator 23, operated by the pyrotechnic charge contained therein, and by means of its cam portion 27a, tilts the body 12 of the headrest forwards, bringing it closer to the head of the occupant of the seat.

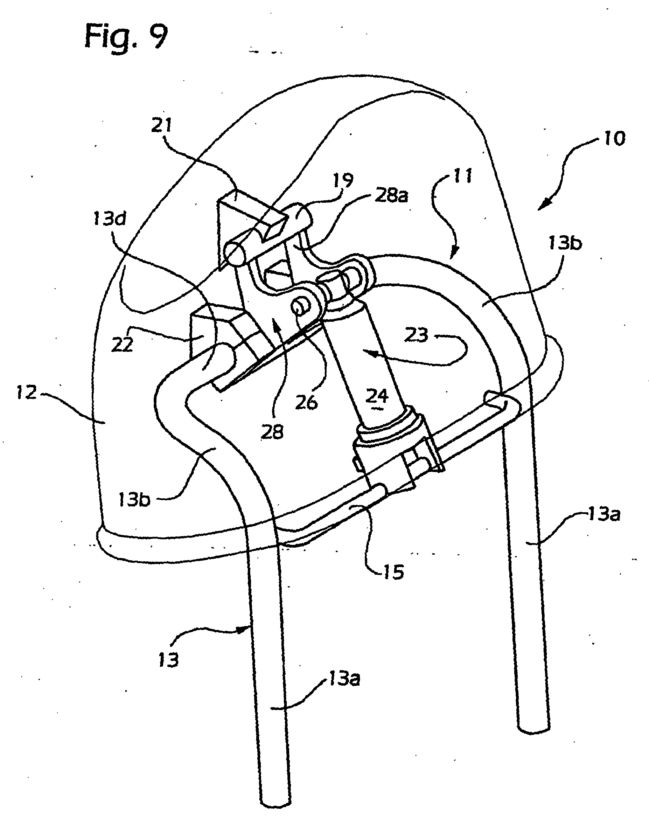

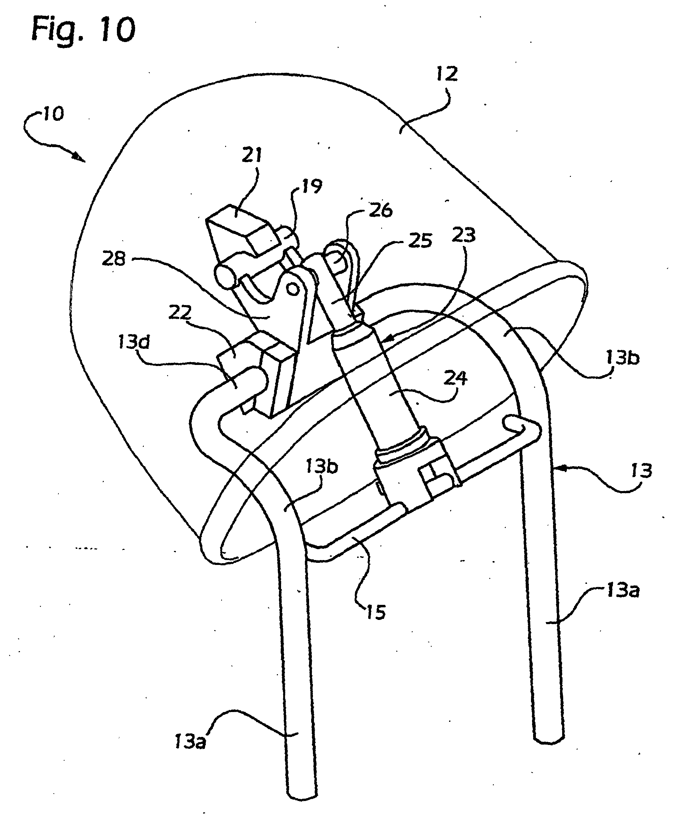

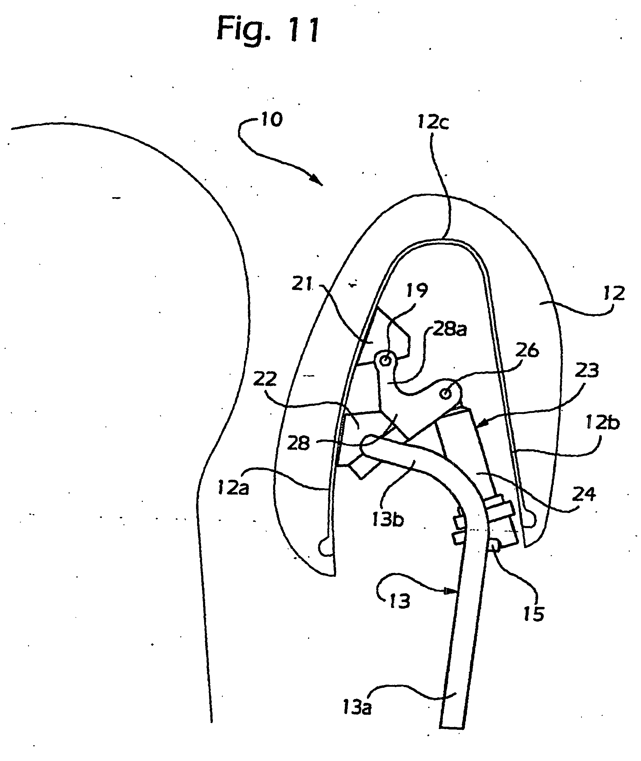

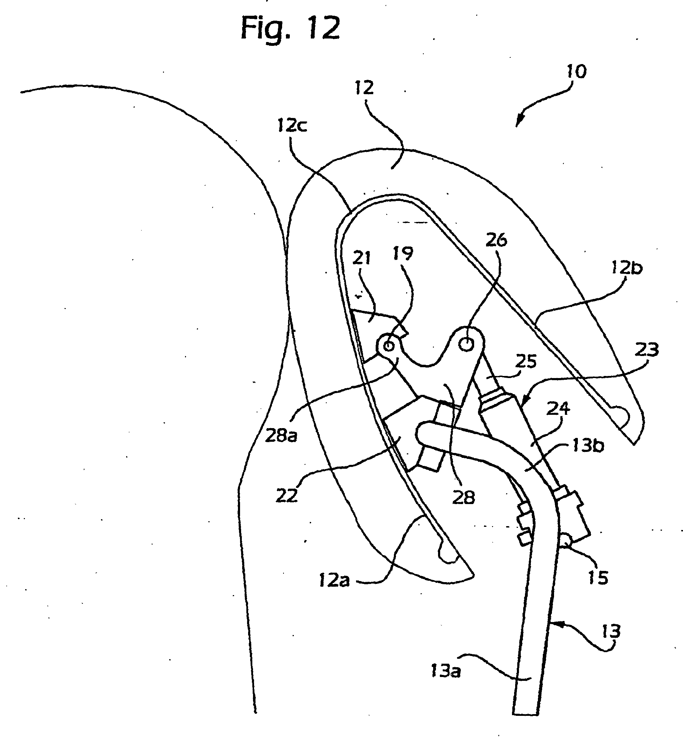

A third embodiment of an active headrest according to the present invention is illustrated in Figures 9 to 12, where the same reference numerals have been given to parts and elements identical or similar to those in the preceding Figures.

This variant of construction is of a similar type to that of the second embodiment, in that it also provides for a forward pivoting movement (tilting) of the headrest body. The main difference consists in that this pivoting movement takes place about a transverse horizontal axis which is arranged in a lower zone, rather than an upper zone, of the headrest body.

In this case, the metal tubular structure 13 of the frame 11 of the headrest comprises:
a first pair of essentially rectilinear and vertical segments 13a, having parallel axes, which can be inserted into corresponding receiving locations provided in the upper portion of the backrest to enable the installation of the headrest on the seat,
- a second pair of curvilinear segments 13b which constitute the front extension of the segments 13a, and
- an essentially rectilinear segment 13d, which is arranged transversely to interconnect the upper ends of the curvilinear segments 13b.

The frame 11 further comprises a substantially C-shaped metal bar 15 which is fixed (for example, by welding) between the upper ends of the vertical segments 13a of the tubular structure 13.

The body 12 of the headrest is of the type described above, with the addition of a pair of support members 21 and 22, that is, an upper member and a lower member, respectively, which are fixed to the internal face of the front convex wall 12b. The lower support member 22 serves to support the body 12 for pivoting about the tubular segment 13d of the frame 11.

According to this third embodiment of the invention, the mechanism for moving the headrest comprises a lever 28 which is fixed to the lower support member 22 of the headrest body 12 in order to pivot about the tubular segment 13d of the frame 11. The lever 28 comprises a first arm 28a which is articulated at its free end, through a pin 19, to the upper support member 21 of the body 12 and a second arm 28b which is articulated at its free (rear) end, through a pin 26, to the end of the rod 25 of a linear pyrotechnic actuator 23, the cylinder 24 of which is articulated at its lower end to the bar 15 of the frame 11.

In the event of a collision, therefore, the lever 28 pivots counter-clockwise about the tubular segment 13d, owing to the extension of the actuator 23, operated by the explosive charge contained therein, and tilts the headrest body 12 forwards, bringing it closer to the head of the occupant of the seat, by acting on the body through the articulation to the upper support member 21.

As will be clearly appreciated in the light of the foregoing description, an active headrest according to the invention can ensure a prompt and effective intervention in the event of a collision owing to the provision of a movement mechanism operated by a pyrotechnic actuator, which is capable of moving the headrest into the active position within the time limit of 20 ms. The headrest further has a simple structure, which allows the production thereof at reduced cost and ensures maximum reliability of operation and, above all, can be manufactured separately from the seat on which it will have to be installed later on.

Naturally, the principle of the invention remaining the same, embodiments and details of construction may be varied widely with respect to those described and illustrated purely by way of non-limiting example.

## Claims

1. An active headrest (10) for a seat of a vehicle, such as a motor vehicle, comprising:
a frame structure (11) arranged to be mounted on top of the seat;
a headrest body (12) having a front surface (12a) for supporting the head of the occupant of the seat; and
a linear actuator (23) arranged, in the event of a collision of the vehicle, to cause the movement of the front surface (12a) from a rest position to an active position which is advanced towards the head of the occupant; **characterized in that** the headrest body (12) is pivotally mounted on the frame structure (11) about a transverse horizontal axis which is fixed to the frame structure (11), whereby the movement of the front surface (12a) from the rest position to the active position consists simply in a forward pivotal movement about that axis.

2. An active headrest according to Claim 1, further comprising a pivoting lever (27; 28) articulated to the frame structure (11) about the said transverse horizontal axis and to the said linear actuator (23).

3. An active headrest according to Claim 2, wherein the transverse horizontal axis of the body (12) is arranged in the lower region of the body (12), the pivoting lever (28) is further connected to the front surface (12a) of the headrest body (12) and the actuator (23) is articulated at its lower end to the frame structure (11) and at its upper end to the pivoting lever (28).

4. An active headrest according to Claim 2, wherein the transverse horizontal axis of the body (12) is arranged in the upper region of the body (12) and the pivoting lever (27) forms a front portion (27a) arranged to act as a cam on the front surface (12a) of the body (12) so as to cause the body to pivot forwards when the lever (27) is operated by the actuator (23).

5. An active headrest according to Claim 1, wherein the frame structure (11) comprises a pair of essentially rectilinear and parallel segments (13a) arranged to be inserted into corresponding receiving locations provided in a backrest of the seat, and a transverse members (14, 15; 13d, 15) for pivotally supporting the actuator (23) and the pivoting lever (27; 28).

6. An active headrest according to any one of the preceding claims, wherein the actuator (23) is controlled by an electronic control unit arranged to receive and process the information supplied by collision sensing means in order to establish, according to the type and intensity of the collision, whether to activate the actuator (23).

7. An active headrest according to any of the preceding claims, wherein the actuator (23) is a pyrotechnic actuator.

8. An active headrest according to any of the preceding claims, wherein the body (12) comprises a front wall (12a) providing said front surface, a rear wall (12b) and an upper portion (12c) connecting the said front and rear walls (12a, 12b), whereby the pivoting lever (27; 28) and the actuator (23) are housed inside the headrest body (12).

## Revendications

1. Repose-tête actif (10) pour un siège de véhicule, tel qu'un véhicule motorisé, comprenant :
une structure cadre (11) agencée pour être montée sur le haut du siège ;
un corps de repose-tête (12) ayant une surface avant (12a) pour supporter la tête de l'occupant du siège ; et
un actionneur linéaire (23) agencé, en cas de collision du véhicule, pour entraîner le déplacement de la surface avant (12a) depuis une position de repos vers une position active qui est avancée vers la tête de l'occupant ;
**caractérisé en ce que** le corps de repose-tête (12) est monté de manière pivotante sur la structure cadre (11) autour d'un axe horizontal transversal qui est fixé à la structure cadre (11), moyennant quoi le déplacement de la surface avant (12a) depuis la position de repos vers la position active consiste simplement en un déplacement pivotant vers l'avant autour de cet axe.

2. Repose-tête actif selon la revendication 1, comprenant en outre un levier de pivotement (27 ; 28) articulé sur la structure cadre (11) autour dudit axe horizontal transversal et sur ledit actionneur linéaire (23) .

3. Repose-tête actif selon la revendication 2, dans lequel l'axe horizontal transversal du corps (12) est agencé dans la région inférieure du corps (12), le levier de pivotement (28) est en outre relié à la surface avant (12a) du corps de repose-tête (12) et l'actionneur (23) est articulé à son extrémité inférieure sur la structure cadre (11) et à son extrémité supérieure sur le levier de pivotement (28).

4. Repose-tête actif selon la revendication 2, dans lequel l'axe horizontal transversal du corps (12) est agencé dans la région supérieure du corps (12) et le levier de pivotement (27) forme une partie avant (27a) agencée pour agir comme une came sur la surface avant (12a) du corps (12) de manière à amener le corps à pivoter vers l'avant lorsque le levier (27) est actionné par l'actionneur (23).

5. Repose-tête actif selon la revendication 1, dans lequel la structure cadre (11) comprend une paire de segments essentiellement rectilignes et parallèles (13a) agencés pour être insérés dans des emplacements de réception correspondants disposés dans un dossier du siège, et des éléments transversaux (14, 15 ; 13d, 15) destinés à supporter de manière pivotante l'actionneur (23) et le levier de pivotement (27 ; 28).

6. Repose-tête actif selon l'une quelconque des revendications précédentes, dans lequel l'actionneur (23) est commandé par une unité de commande électronique agencée pour recevoir et traiter les informations fournies par un moyen de détection de collision afin d'établir, selon le type et l'intensité de la collision, si l'actionneur (23) doit être activé.

7. Repose-tête actif selon l'une quelconque des revendications précédentes, dans lequel l'actionneur (23) est un actionneur pyrotechnique.

8. Repose-tête actif selon l'une quelconque des revendications précédentes, dans lequel le corps (12) comprend une paroi avant (12a) créant ladite surface avant, une paroi arrière (12b) et une partie supérieure (12c) reliant lesdites parois avant et arrière (12a, 12b), moyennant quoi le levier de pivotement (27 ; 28) et l'actionneur (23) sont logés à l'intérieur du corps de repose-tête (12).

## Patentansprüche

1. Aktive Kopfstütze (10) für den Sitz eines Fahrzeugs, beispielsweise eines Kraftfahrzeugs, wobei die Kopfstütze enthält:
einen Rahmenaufbau (11), der so ausgebildet ist, dass er oben auf dem Sitz montiert werden kann;
einen Kopfstützen-Körper (12), der eine vordere Fläche (12a) besitzt, um den Kopf jener Person aufzunehmen, die den Sitz einnimmt; und
ein lineares Stellglied (23), das so aufgebaut ist, dass es bei einem Zusammenstoß des Fahrzeugs eine Bewegung der vorderen Fläche (12a) aus einer Ruhestellung in eine aktive Stellung hervorruft, die zum Kopf jener Person vorgeschoben ist, die den Sitz einnimmt;
**dadurch gekennzeichnet, dass** der Kopfstützen-Körper (12) auf dem Rahmenaufbau (11) um eine horizontale Querachse schwenkbar befestigt ist, die am Rahmenaufbau (11) angebracht ist, wodurch die Bewegung der vorderen Fläche (12a) von der Ruhestellung zur aktiven Stellung lediglich in einer nach vorne gerichteten Schwenkbewegung um diese Achse besteht.

2. Aktive Kopfstütze gemäß Anspruch 1, wobei die Kopfstütze weiters einen Schwenkhebel (27; 28) enthält, der am Rahmenaufbau (11) um die horizontale Querachse und im linearen Stellglied (23) gelenkig gelagert ist.

3. Aktive Kopfstütze gemäß Anspruch 2, wobei die horizontale Querachse des Körpers (12) im unteren Bereich des Körpers (12) angeordnet ist, wobei der Schwenkhebel (28) weiters mit der vorderen Fläche (12a) des Kopfstützen-Körpers (12) verbunden ist, und wobei das Stellglied (23) an seinem unteren Ende im Rahmenaufbau (11) und an seinem oberen Ende im Schwenkhebel (28) gelenkig gelagert ist.

4. Aktive Kopfstütze gemäß Anspruch 2, wobei die horizontale Querachse des Körpers (12) im oberen Bereich des Körpers (12) angeordnet ist, und wobei der Schwenkhebel (27) einen vorderen Teil (27a) bildet, der so angeordnet ist, dass er auf die vordere Fläche (12a) des Körpers (12) als Nocke wirkt, um den Körper nach vorne zu verschwenken, wenn der Hebel (27) vom Stellglied (23) betätigt wird.

5. Aktive Kopfstütze gemäß Anspruch 1, wobei der Rahmenaufbau (11) ein Paar von im Wesentlichen geradlinigen und parallelen Segmenten (13a), die so angeordnet sind, dass sie in entsprechende Aufnahmen eingesetzt werden können, die in einer Rückenlehne des Sitzes vorgesehen sind, sowie Querelemente (14, 15; 13d, 15) enthält, um das Stellglied (23) und den Schwenkhebel (27; 28) schwenkbar aufzunehmen.

6. Aktive Kopfstütze gemäß irgendeinem der vorangegangenen Ansprüche, wobei das Stellglied (23) von einer elektronischen Steuereinheit gesteuert wird, die so aufgebaut ist, dass sie jene Information empfängt und verarbeitet, die von einer Zusammenstoß-Fühlereinrichtung geliefert wird, um in Übereinstimmung mit der Art und der Intensität des Zusammenstoßes festzustellen, ob das Stellglied (23) betätigt werden soll.

7. Aktive Kopfstütze gemäß irgendeinem der vorangegangenen Ansprüche, wobei das Stellglied (23) ein pyrotechnisches Stellglied ist.

8. Aktive Kopfstütze gemäß irgendeinem der vorangegangenen Ansprüche, wobei der Körper (12) eine vordere Wand (12a), die die vordere Fläche liefert, eine hintere Wand (12b) sowie einen oberen Teil (12c) enthält, der die vordere und die hintere Wand (12a, 12b) verbindet, wodurch der Schwenkhebel (27; 28) und das Stellglied (23) innerhalb des Kopfstützen-Körpers (12) untergebracht sind.
